Europäisches Patentamt

European Patent Office

Office européen des brevets

(11) Numéro de publication: **0 077 232**
**A1**

## (12) DEMANDE DE BREVET EUROPEEN

(21) Numéro de dépôt: **82401715.6**

(22) Date de dépôt: **22.09.82**

(51) Int. Cl.³: **H 04 B 9/00**

(30) Priorité: **02.10.81 FR 8118754**

(71) Demandeur: **MERLIN GERIN, Rue Henri Tarze, F-38050 Grenoble Cedex (FR)**

(43) Date de publication de la demande: **20.04.83**
**Bulletin 83/16**

(72) Inventeur: **Alemany, Claude, Merlin Gerin, F-38050 Grenoble Cedex (FR)**

(84) Etats contractants désignés: **BE CH DE GB IT LI NL SE**

(74) Mandataire: **Kern, Paul, Merlin Gerin Sce. Brevets 20, rue Henri Tarze, F-38050 Grenoble Cedex (FR)**

(54) **Système de télétransmission à fibres optiques.**

(57) Le système de télétransmission à fibres optiques comporte un dispositif de détection de panne (28), qui interrompt l'émission d'un flux lumineux sur le câble émetteur optique (12) ou impose une émission d'une suite de signaux zéro sur ce câble. Le récepteur est équipé d'un détecteur de flux lumineux moyen nul, qui traduit l'état de défaillance de la station émettrice.

EP 0 077 232 A1

## SYSTEME DE TELETRANSMISSION A FIBRES OPTIQUES.

L'invention est relative à un système de télétransmission digitale ayant des stations de transmission à émetteur et récepteur électro-optiques, reliées entre elles par des liaisons à fibres optiques, un émetteur étant agencé pour émettre d'une part des messages lumineux numériques et d'autre part des drapeaux lumineux prédéterminés et le récepteur comportant un détecteur du flux lumineux moyen reçu.

L'utilisation de télétransmission entre des stations de communication s'appuie à la fois sur des protocoles de liaison standard et sur des supports matériels, qui sont de plus en plus des fibres optiques. L'un des problèmes posés par de telles architectures, qui utilisent souvent des composants à semi-conducteur intégré, est qu'une panne peut apparaître dans une station de transmission, celle-ci continuant à générer des drapeaux définis dans le protocole, qui masque la panne. Une panne n'est perçue que si elle engendre des mauvaises réponses échangées sur des messages de surveillance ou des messages normalement échangés. La défaillance d'une station de transmission provoquant une panne différente n'est pas détectée et des erreurs de transmission sont inévitables.

La présente invention a pour but de remédier à cet inconvénient et de permettre la réalisation d'un système dans lequel les pannes survenant dans une station de transmission sont détectées rapidement et de manière exhaustive et dans lequel les autres stations avec lesquelles communique la station de transmission sont informées rapidement de l'état de panne de cette dernière station.

Le système de transmission selon la présente invention est caractérisé par le fait que la station comporte un détecteur de panne et un dispositif de sécurité piloté par le détecteur de panne, de façon à interrompre l'émission desdits messages et drapeaux lors d'une panne de la station, ledit détecteur du flux lumineux moyen détectant l'absence de flux lumineux et signalant la panne.

Le dispositif récepteur optique possède par construction une détection du flux lumineux moyen et une insuffisance de ce flux lumineux moyen peut traduire une panne de l'émission ou de la transmission du flux lumineux. Cette détection n'est pas sûre car l'insuffisance du flux lumineux moyen peut également signifier l'émission d'une série de signaux de flux lumineux nul, par exemple un série de zéro. Pour éviter cela on peut utiliser une transmission où l'on est sûr de ne pas avoir trop de zéros qui se suivent ou utiliser un artifice permettant de conserver un flux lumineux moyen sensiblement constant par l'émission de drapeaux, c'est-à-dire d'une suite de signaux à configuration figée. Ces drapeaux sont souvent générés automatiquement par des composants à semi-conducteur intégré et ceux-ci peuvent continuer à émettre des drapeaux en cas de panne de la station de transmission. L'émission des drapeaux peut masquer la panne et les autres stations ne s'aperçoivent pas immédiatement de l'indisponibilité de la station de transmission. L'état de panne n'apparaîtra que lors de l'échange de messages normalement échangés ou lors de messages de surveillance envoyés périodiquement, même en l'absence de besoin d'échanges d'informations. Selon la présente invention l'état de panne est signalé immédiatement à l'ensemble des stations réceptrices par l'interruption de l'émission des messages et/ou des drapeaux dès l'apparition de la panne. Le détecteur de panne, qui peut être d'un type quelconque, provoque immédiatement la coupure de l'émission lumineuse qui est détectée par les stations réceptrices pour signaler l'existence d'une panne au niveau de la station de transmission. La coupure de l'émission lumineuse peut être effectuée en coupant directement la tension d'alimentation du composant optique d'émission ou en émettant une série de signaux zéro lorsque le signal zéro correspond à l'absence d'un flux lumineux. Les dispositifs récepteurs dans la ou les stations de communication, avec lesquelles communiquent la station en panne, détectent alors instantanément un flux lumineux moyen nul et si l'on a pris la précaution de signaler rapidement ou d'interrompre la télétransmission lorsque le dispositif récepteur optique détecte un tel flux lumineux moyen nul, toute erreur de transmission peut être évitée.

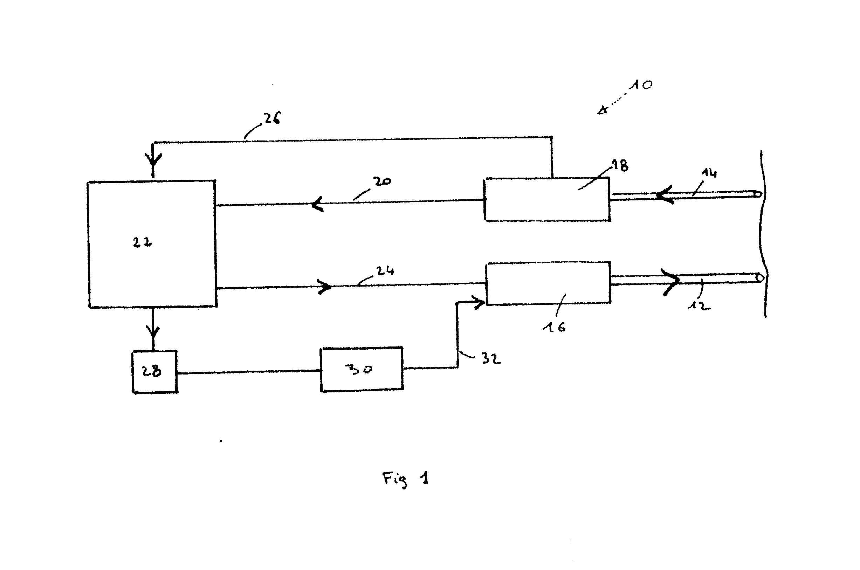

D'autres avantages et caractéristiques ressortiront plus clairement de la description qui va suivre d'un mode de mise en oeuvre de l'invention, donné à titre d'exemple non limitatif et représenté au dessin annexé, dans lequel la figure unique est un schéma synoptique d'une station de transmission selon l'invention.

Sur la figure, une station de transmission à émetteur et récepteur, désignée par le repère général 10, est reliée par des câbles optiques émetteur 12 et récepteur 14 à une ou plusieurs stations pouvant être des stations du même type à émetteur et récepteur ou des stations uniquement réceptrices ou émettrices. La structure du réseau de transmission peut être en antenne, en boucle ou de tout autre type, la liaison entre les différentes stations étant réalisée par les câbles optiques 12, 14. Le câble émetteur 12 à fibres optiques est relié à un dispositif émetteur 16, constitué par une source de lumière, par exemple une diode LED, qui transforme un signal électrique en un signal lumineux. Le câble récepteur 14 à fibres optiques est relié à un dispositif récepteur 18, par exemple constitué par une photo diode transformant le signal lumineux en un signal électrique. Le récepteur 18 est relié par une liaison 20 à une unité centrale 22 de la station 10, qui exploite le signal transmis par le câble récepteur 14. L'unité centrale 22 est reliée par une liaison 24 à l'émetteur 16 pour transmettre à ce dernier le signal destiné au câble émetteur 12. Le dispositif récepteur 18 possède par construction une détection du flux lumineux moyen et cette information est transmise par une liaison 26 à l'unité centrale 22, qui signale instantanément toute réception d'un flux lumineux moyen nul représentatif d'une défaillance d'une station de transmission du réseau. L'unité centrale 22 comporte un dispositif de détection de panne 28, qui détecte toute panne de la station de transmission 10, et pilote un dispositif de commande 30 relié au dispositif d'émission 16 par une liaison 32. Lorsque le dispositif de détection de panne 28 détecte un défaut dans la station de transmission il envoie un signal au dispositif de commande 30, qui coupe instantanément l'alimentation de l'émetteur 16. Selon une variante de réalisation le dispositif de commande 30 impose lors d'une panne l'émission de signaux zéro dans un mode où le zéro correspond à un flux lumineux nul. Dans les deux cas le signal optique, transmis par la fibre optique 12, est de valeur nulle.

La station 10 est agencée pour une transmission digitale, l'émetteur 16 transmettant en plus des messages échangés, des drapeaux, c'est-à-dire une suite de signaux à configuration figée. En fonctionnement normal, le flux lumineux moyen transmis par la fibre optique 12 et correspondant soit aux messages, soit aux drapeaux émis par l'émetteur 16, est toujours différent de zéro. Le dispositif récepteur d'une station reliée à la station 10 détecte la présence de ce flux lumineux moyen qui traduit le bon fonctionnement de la station de transmission 10. Lors d'une panne, détectée par le dispositif de détection 28, le dispositif d'émission 16 reçoit par le dispositif de commande 30 un ordre d'interruption de l'émission lumineuse ou de transmission d'une série de signaux lumineux nuls, tous deux se traduisant par un arrêt de la transmission d'un flux optique par la fibre 12. Les stations reliées à la station de transmission 10 détectent cette interruption de la transmission du flux lumineux et sont informées de la défaillance de la station de transmission 10. D'une manière analogue, la station de transmission 10 est informée d'une défaillance d'une autre station du réseau par la détection d'une réception d'un flux lumineux moyen nul par le dispositif récepteur 18. Ce dernier transmet par la liaison 26 le signal de défaillance à l'unité centrale 22 agencée pour tirer les conséquences de cette défaillance. Il est inutile de décrire en détail les composants de la station de transmission 10, qui sont bien connus des spécialistes, et de mentionner que la transmission utilisée assure la fiabilité des messages par des moyens particulièrement simples. L'utilisation du flux lumineux moyen nul pour la transmission de l'information de défaillance d'une station assure une sécurité positive traduisant en même temps toute autre défaillance, par exemple une rupture de la fibre optique ou une interruption de l'alimentation de la station.

L'invention n'est bien entendu nullement limitée au mode de mise en oeuvre plus particulièrement décrit et représenté au dessin annexé.

Revendications

1. Système de télétransmission digitale ayant des stations (10) de transmission à émetteur (16) et récepteur (18) électro-optiques, reliées entre elles par des liaisons à fibres optiques (12, 14), un émetteur (16) étant agencé pour émettre d'une part des messages lumineux numériques et d'autre part des drapeaux lumineux prédéterminés et le récepteur (18) comportant un détecteur du flux lumineux moyen reçu, caractérisé en ce que la station (10) comporte un détecteur de panne (28) et un dispositif de sécurité (30) piloté par le détecteur de panne, de façon à interrompre l'émission desdits messages et drapeaux lors d'une panne de la station, ledit détecteur du flux lumineux moyen détectant l'absence de flux lumineux et signalant la panne.

2. Système de télétransmission selon la revendication 1, caractérisé en ce que ledit dispositif de sécurité (30) interrompt l'alimentation de l'émetteur (16) électro-optique en cas de panne.

3. Système de télétransmission selon la revendication 1, caractérisé en ce que ledit dispositif de sécurité (30) engendre une émission de suites de signaux correspondant à un flux lumineux nul, notamment de zéro.

4. Système de télétransmission selon la revendication 1, 2 ou 3, caractérisé en ce que chaque station (10) comporte un émetteur électro-optique (16), un récepteur électro-optique (18), un détecteur de panne (28) de la station (10), un dispositif de sécurité (30) interrompant l'émission optique en cas de panne, un dispositif de surveillance du flux lumineux moyen reçu par le récepteur (18) et un indicateur de panne de la transmission piloté par le dispositif de surveillance du flux lumineux moyen.

Fig 1

0077232

Office européen
des brevets

**RAPPORT DE RECHERCHE EUROPEENNE**

Numéro de la demande

EP 82 40 1715

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| | --- | | H 04 B 9/00 |
| X | PATENTS ABSTRACTS OF JAPAN, vol. 1, no. 81, 28 juillet 1977, page 1628E77; & JP - A - 42 19 005 (DENRYOKU CHUO KENKYUSHO)(14-02-1977) *Résumé en entier* | 1,4 | |
| | --- | | |
| A | PATENTS ABSTRACTS OF JAPAN, vol. 4, no. 121, 27 août 1980, pages 63E23; & JP - A - 55 75 355 (FUJITSU K.K.) (06-06-1980) *Résumé en entier* | 1,3 | |
| | --- | | |
| A | POST OFFICE ELECTRICAL ENGINEERS JOURNAL, vol. 68, no. 3, octobre 1975, pages 170-174; B.HALL et al.: "Further considerations of Optical-Fibre Transmission Systems". *Page 174, colonne de gauche, alinéas 1,2* | 1,2 | DOMAINES TECHNIQUES RECHERCHES (Int. Cl. ³) H 04 B 9/00 |
| | --- | | |
| A | COMPUTER DESIGN, vol. 18, no. 3 , mars 1979, pages 166-170; H.O.SORENSEN: "High Speed Low Error Data Transmission with Fiber Optics". *Page 170, colonne du milieu, lignes 41-45* | 1,4 | |
| | ----- | | |

Le présent rapport de recherche a été établi pour toutes les revendications

| Lieu de la recherche LA HAYE | Date d'achèvement de la recherche 05-01-1983 | Examinateur GEISLER J.A.R. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82